# EUROPEAN PATENT APPLICATION

(11) **EP 4 316 960 A1**
(43) Date of publication of application: **07.02.2024**
(21) Application number: 23189777.8
(22) Date of filing: 04.08.2023
(51) Int. Cl.: B62J 25/04, B62J 43/16, B62J 43/28, B62K 11/10, B62M 7/08

(54) **FLOORBOARD FOR A CHASSIS OF A STRADDLE TYPE VEHICLE**

(30) Priority: 04.08.2022 IN 202241044647
(71) Applicant: TVS Motor Company Limited, 600006 Chennai (IN)
(72) Inventor: Kumar, Surendiran, 600 006 Chennai (IN); Sornappan, Banu Sharmanath, 600 006 Chennai (IN)
(74) Representative: Patentanwaltskanzlei Matschnig & Forsthuber OG

(57) **Abstract**

Examples for straddle-type vehicles (100) and chassis (102) thereof are disclosed. In one example, the straddle-type vehicle (100) has a head pipe (111), a rear frame structure (108), and the floorboard structure (106) connecting the head pipe (111) and the rear frame structure (108). The floorboard structure (106) includes a front cross-member (200) connected to the head pipe (111), the front cross-member (200) having a first front cross-member end (200-1) and a second front cross-member end (200-2). Similarly, a rear cross-member (202) connected to the rear frame structure (108), the rear cross-member (202) may have a first rear cross-member end (202-1) and a second rear cross-member end (202-2). The floorboard structure (106) further includes a lateral connector structure connecting the front cross-member (200) and the rear cross-member (202). The lateral connector structure (206) may include a first lateral connector set (206-1) connecting the first front cross-member end (200-1) of the front cross-member (200) to the first rear cross-member end (202-1) of the rear cross-member (202) and a second lateral connector set (206-2) connecting the second front cross-member end (200-2) of the front cross-member (200) to the second rear cross-member end (202-2) of the rear cross-member (202).

## Description

### TECHNICAL FIELD

The present subject matter relates, in general, to vehicles, and, in particular, to straddle-type vehicles.

### BACKGROUND

A straddle-type vehicle, such as a two-wheeler vehicle includes driving members, such as an engine or a motor, which provide the propulsion power to drive the vehicle. In all such vehicles, the components are typically mounted to a chassis of the vehicle. The chassis forms the main support structure of the vehicle and bears all the stresses of the components assembled in the vehicle. Generally, the chassis itself has a head tube, a downtube, a floorboard part, and a rear frame which are integrated in a manner that the chassis has the strength and the load-bearing ability.

### BRIEF DESCRIPTION OF DRAWINGS

The detailed description is provided with reference to the accompanying figures. It should be noted that the description and the figures are merely examples of the present subject matter and are not meant to represent the subject matter itself.
Figure 1A illustrates a side view of a straddle-type vehicle, in accordance with an example of the present subject matter.
Figure 1B illustrates a side perspective view of the straddle-type vehicle, in accordance with an example of the present subject matter.
Figure 2A illustrates a perspective view of a chassis of the straddle-type vehicle, in accordance with an example of the present subject matter.
Figure 2B illustrates a side view of a chassis of the straddle-type vehicle, in accordance with an example of the present subject matter.
Figure 2C illustrates a top view of a chassis of the straddle-type vehicle, in accordance with an example of the present subject matter.
Figure 2D illustrates an exploded view of a chassis of the straddle-type vehicle, in accordance with an example of the present subject matter.
Figure 2E illustrates a side perspective view of a chassis of the straddle-type vehicle, in accordance with an example of the present subject matter.
Figure 2F illustrates a top perspective view of a chassis of the straddle-type vehicle, in accordance with an example of the present subject matter.
Figure 2G illustrates a side view of a chassis of the straddle-type vehicle, in accordance with an example of the present subject matter.
Figure 2H illustrates a side perspective view of a floorboard structure for a chassis of the straddle-type vehicle, in accordance with an example of the present subject matter.
Figure 3A illustrates a perspective view of a floorboard structure, in accordance with an example of the present subject matter.
Figure 3B illustrates a sectional view of a floorboard structure, in accordance with an example of the present subject matter.
Figure 3C illustrates a side perspective view of a floorboard structure with an intermediate interface, in accordance with an example of the present subject matter.
Figure 3D illustrates a side perspective view of a floorboard structure with an intermediate interface, in accordance with an example of the present subject matter.
Figure 3E illustrates a sectional view of a floorboard structure across a sectional plane X-X shown in Figure 2H, in accordance with an example of the present subject matter.
Figure 3F illustrates a top sectional view of a floorboard structure, in accordance with an example of the present subject matter.

Throughout the drawings, identical reference numbers designate similar, but not necessarily identical, elements. The figures are not necessarily to scale, and the size of some parts may be exaggerated to more clearly illustrate the example shown. Moreover, the drawings provide examples and/or implementations consistent with the description; however, the description is not limited to the examples and/or implementations provided in the drawings.

### DETAILED DESCRIPTION

The present subject matter relates to aspects of chassis of straddle-type vehicles, and, as an example, to aspects relating to a floorboard of a chassis for a straddle-type vehicle.

Conventionally, the straddle-type vehicle (hereinafter referred to as the vehicle) has a drive system that generates traction power to move the vehicle. The vehicle is a two-wheeler, which can be an electric vehicle (EV), a hybrid electric vehicle (HEV), or an Internal Combustion (IC) engine-driven vehicle. The separate drive systems have different components that are all mounted to a frame of the vehicle. Vehicles with different drive systems, such as the EV, the HEV, or an IC engine-driven vehicle require different frames with different mounting arrangements to mount components of the vehicle in an optimized arrangement, such that load/weight distribution, balance, and ride quality of the vehicle are not affected. However, any change, addition, or modification in the components, the drive system of the vehicle, or in the vehicle as a whole, requires making a change to the frame of the vehicle.

In recent decades the attraction toward the vehicles is increasing and, automobile research and development centers and organizations have been constantly working on ways to improve the performance as well as aesthetics of the vehicle. It is necessary for such automobile research and development centers and organizations to meet customer requirements and provide an improved straddle-type vehicle, such as convenient leg space, improved aesthetics, comfortable riding, and lightweight. Changes and improvements are being constantly made to the existing vehicles, and thus, there is an increase in the requirement of making changes to the already existing frame and also, manufacturing a new frame structure altogether.

In certain cases, to mount a new additional component instead of manufacturing a new frame, changes are made to the existing frame by packaging the already existing components along with the new additional component. In such cases, changes are made to the existing frame by providing mounting provisions, for instance, cross members and brackets to mount the new component in the existing frame of the vehicle. In certain cases, to mount a new component into the existing frame of the vehicle, for instance, where the requirement is to mount an additional energy storage device to have an energy backup and increase the working efficiency of the vehicle. The additional energy storage device may be required to be packaged into the existing frame of the vehicle where, the additional storage device is an energy back-up and may be used for auxiliary usages, such as an audio system, a video system, a USB charging system, and the like would be cumbersome to mount all the already existing components along with the additional components in the existing frame structure. However, to mount such an additional energy storage device in the already existing frame of the vehicle, the assembly of packaging of the already existing components may also be changed. Owing to the design of the chassis, the components have to be assembled in a set sequence. Not only does such an assembly make the process of assembling and mounting the components inefficient, but it may also lead to inefficiencies and issues at the time of repair and servicing as well.

In such conventional frames, to mount the additional component into the existing frame structure without increasing the weight of the vehicle, and while maintaining the load/weight distribution, interface parts with lesser weight may be used in the frame to mount the components onto the frame. For instance, cross-members made up of less weight configurations may be used to have a load/weight distribution balance. However, by using lesser-weight interface parts, the strength of the vehicle may be compromised, and the frame may not be able to withstand the load of all the drive-system components of the vehicle. Additionally, by achieving less weight, the frame may not be able to withstand the external body parts of the vehicle and consequently, may adversely affect the aesthetics of the vehicle.

In certain cases, manufacturing and redesigning a whole new frame altogether to mount new technologies, additional components, having constant load/weight distribution, balance, comfortable riding for a rider, leg space for the rider, aesthetic appeal, and ride quality of the vehicle, may not be the most convenient approach to follow since, it may be a cumbersome process and may be time-consuming, may incur direct costs.

The present subject matter discloses examples and aspects to *inter alia* address the above-mentioned problems. The present subject matter, in one example, relates to a straddle-type vehicle, such as a two-wheeler, which can be an electric vehicle (EV), a hybrid electric vehicle (HEV), or an internal combustion (IC) engine-driven vehicle. According to an aspect, the straddle-type vehicle referred to interchangeably as the vehicle may have a chassis that may be the main support structure of the vehicle and may bear all the stresses of the components assembled in the vehicle.

According to an example, the chassis of the vehicle may have three sections i.e., a front frame structure, a floorboard structure, and a rear frame structure. The chassis of the vehicle may be so designed that the three sections may be manufactured separately and then may be joined together either by way of welding or by connecting provisions. According to an example, the chassis may be manufactured as a whole including the front frame structure, the floorboard structure, and the rear frame structure. According to an example, the front frame structure may have a head pipe, a front suspension, a handlebar, and the like. According to another example, the rear frame structure may have a first side tube, a second side tube parallel to the first side tube, a rear frame cross-connector connecting the first side tube to the second side tube, and the like. The rear frame structure may have a head pipe proximal end and a head pipe distal end, the rear frame cross-connector connecting the first side tube and the second side tube in proximity of the head pipe distal end. The chassis of the present subject matter may be so designed and manufactured that the floorboard structure may be positioned in between the head pipe of the front frame structure and the rear frame structure.

According to an example, the floorboard structure may have a plurality of cross-tube members that may help connect the head pipe and the rear frame tube with the floorboard structure. According to another example, the floorboard structure may have a front cross-member and a rear cross-member. In this example, the head pipe connecting to the handlebar of the vehicle may extend downwards and may be connected to the front cross-member that extends in a lateral direction. According to an example, the front cross-member connected to the head pipe may have a first front cross-member end and a second front cross-member end. Similarly, the rear frame structure may also be connected to a rear cross-member member that may also extend in the lateral direction. According to an example, the rear cross-member of the floorboard structure may be connected to the rear frame structure of the vehicle. According to an example, the rear cross-member connected to the rear frame structure of the vehicle may have a first rear cross-member end and a second rear cross-member end.

According to an example, the floorboard structure may have a longitudinal support bracket across the central vertical plane axis of the chassis to connect the front cross-member and the rear cross-member. In other examples, in the floorboard structure, the first cross-member and the rear cross-member may be connected through a lateral connector structure.

According to an example, the lateral connector structure may have a first lateral connector set and a second lateral connector set. The floorboard structure may have a lateral support bracket to connect the first lateral connector set and the second lateral connector set. According to an example, the first lateral connector set, and the second lateral connector set are in the non-parallel configuration with respect to each other. The first lateral connector set may connect the first front cross-member end of the front cross-member to the first rear cross-member end of the rear cross-member. The second lateral connector set may connect the second front cross-member end of the front cross-member to the second rear cross-member end of the rear cross-member. According to another example, the first lateral connector set may have a top lateral connector and a bottom lateral connector. Similarly, the second lateral connector set may also have a top lateral connector and a bottom lateral connector. In an example, the front end of the top lateral connector and the bottom lateral connector of both the lateral connector sets, i.e., the first lateral connector set, and the second later connector set, that may be overlapping with the front cross-member may have a slight bend as viewed from a top direction of the vehicle. The single bend in the front end of the top lateral connector and the bottom lateral connector achieves a sleeker design for external style panels and provides effective airflow for cooling the components of the floorboard structure when the vehicle is in motion. In other words, as the vehicle moves, air enters through a plurality of cut-outs in the front frame structure and the single bent of the top lateral connector and the bottom lateral connector allows air to properly flow towards and through the components of the floorboard structure of the chassis. Further, each of the first lateral connector set and the second lateral connector set may have a bracket mounted on the rear cross-member to connect the bottom lateral connector and the rear cross-member.

The top lateral connector and the bottom lateral connector may be in a non-parallel configuration with each other. According to an example, width of the top lateral connector and the bottom lateral connector may be less than width of each of the front cross-member and the rear cross-member. According to another example, the width of the top lateral connector and the bottom lateral connector may be about half the width of each of the front cross-member and the rear cross-member. This configurated provides sufficient space for packaging an additional component without modifying the surrounding interface style parts or the assembling arrangement of the components on the chassis of the vehicle. According to an example, a space may be formed between the front cross-member, the rear cross-member, the first lateral connector set, and the second lateral connector set. The entire configuration of the chassis remains similar to the conventional chassis however, the only changes that are being made are on the floorboard structure. Thus, the packaging assemblies of the components remain the same and, at the same time, no major changes are made to the chassis.

According to an example, the space formed between the front cross-member, the rear cross-member, the first lateral connector set, and the second lateral connector set may be used to package an additional component. For instance, the space may be used for packaging an energy reservoir. According to an example, the energy reservoir may be an electrical energy storage device in case the vehicle is EV or HEV. According to another example, the energy reservoir may be a fuel storage tank when the vehicle is the IC engine-driven vehicle or the HEV. Therefore, the same chassis may be used for vehicles with different drive systems with the only change being made on the floorboard structure for the chassis of the vehicle. This configuration may enable the floorboard structure to protect and cover the energy reservoir from all 4 directions i.e., vertical, lateral, and longitudinal directions. Further, the implementations of the lateral support bracket and the longitudinal support bracket in the floorboard structure mentioned above, protect the energy reservoir from bottom impact load while driving the vehicle. Therefore, accommodating an energy reservoir in the conventional chassis is made possible without adding any additional cross members or mounting provisions to mount any additional component, that may have affected the packaging assembly of components in the conventional chassis. Additionally, a distance of a central axis of the lateral connector structure from a central vertical plane of the chassis may be greater than a distance of a central axis of one of the first side tube and the second side tube of the rear frame structure from the central vertical plane cutting through the chassis. This configuration may increase the rigidness of the chassis in a lateral direction and may also provide for effective packaging space for the energy reservoir in the space.

According to an aspect, the chassis of the vehicle of the present subject matter may have a lighter weight as compared to the conventional frames of the vehicle. The light weight of the chassis of the vehicle of the present subject matter may allow the rider to have a proper weight distribution and balance while riding and the chassis may also be able to withstand the load of the vehicle and the rider. In an example already mentioned above, the three structures i.e., the front frame structure, the floorboard structure, and the rear frame structure may be manufactured independently and then may be joined together to form a single chassis of the vehicle. This may significantly reduce the weight of the chassis of the vehicle. However, the chassis of the present subject matter may be able to withstand the load of the components of the vehicle, the rider, the additional components, or the energy reservoir, as a consequence of the mountings of a plurality of reinforcement component and a plurality of reinforcement gussets in the chassis.

According to an example, the plurality of reinforcement components may be positioned between the top lateral connector, the rear cross-member, and the side tubes of the rear frame structure. The plurality of reinforcement components positioned between the floorboard structure and the rear frame structure may connect the top lateral connector, rear cross-member, and the rear frame structure. According to an example, the reinforcement component positioned between the top lateral connector, rear cross-member, and the rear frame structure increases the strength and stiffness of the chassis to withstand the load.

According to other examples, the plurality of reinforcement gusset may be positioned between the top lateral connector and the bottom lateral connector of each of the lateral connector sets. The reinforcement gussets may be positioned in a perpendicular position between the top lateral connector and the bottom lateral connector that are in a non-parallel configuration. According to an example, the arrangement of the reinforcement gusset positioned perpendicular to the top lateral connector and the bottom lateral connector forms a vertical 'I' section when viewed from the front direction of the vehicle. The arrangement of placement of reinforcement gusset in the floorboard structure provides for both vertical and torsional stiffness of the chassis of the vehicle.

As explained above, the energy reservoir is accommodated in the space formed between the front cross-member, the rear cross-member, the first lateral connector set, and the second lateral connector set of the floorboard structure of the chassis for the vehicle, and the reinforcement gusset may be positioned on both of the connector set i.e., the first lateral connector set, and the second lateral connector set. This configuration results in an accessibility window to be formed between the top lateral connector and the bottom lateral connector in each of the lateral connector sets i.e., the first lateral connector set, and the second lateral connector set. In this way, the energy reservoir accommodated in the space may be easily accessed. The accessibility window may be used for providing access to the energy reservoir positioned in the space in the floorboard structure. For instance, an intermediate interface may be used to connect the energy reservoir with a vehicular component. In an example, the intermediate interface can be an electrical cable for the electrical energy storage device, such as a battery. In another example, the accessibility window may be used for connecting a fuel hose to a fuel tank positioned in the space in the floorboard structure, thereby enhancing the serviceability and accessibility of the energy reservoir for the intermediate interfaces. According to an example, the vehicular component may be a motor, when the vehicle is EV or an HEV. In this example, the intermediate interface may be a control circuit that may regulate the current supply to the motor. In other examples, the vehicular component may be an IC engine in the case of an IC engine-driven vehicle and an HEV. The intermediate interface in this configuration may be a fuel pump.

The above aspects are further illustrated in the figures and described in the corresponding description below. It should be noted that the description and figures merely illustrate principles of the present subject matter. Therefore, various arrangements that encompass the principles of the present subject matter, although not explicitly described or shown herein, may be devised from the description and are included within its scope.

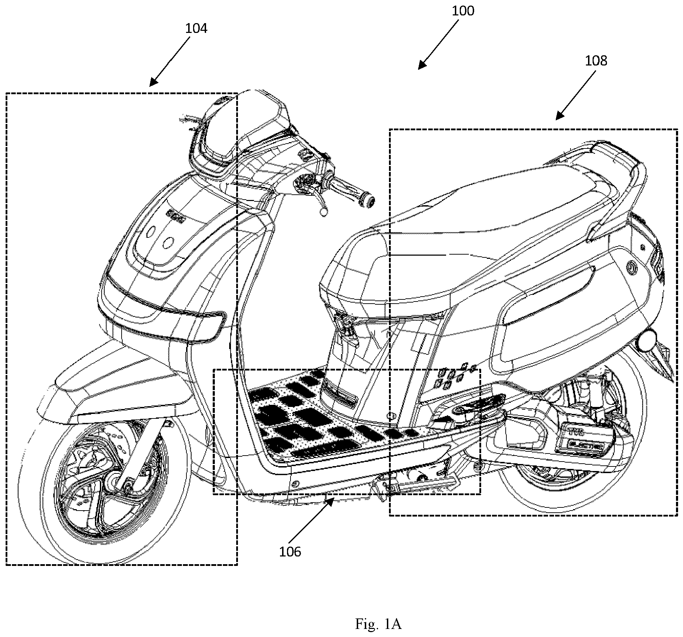

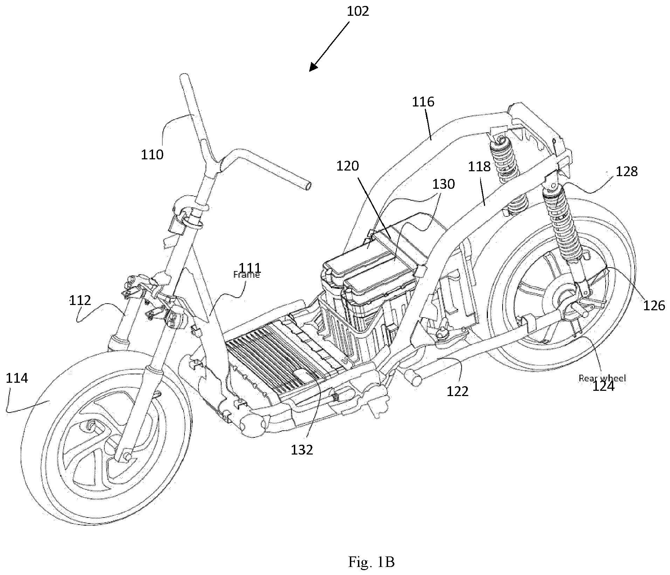

Figure 1A illustrates a side view of a straddle-type vehicle 100, in accordance with an example of the present subject matter. Figure 1B illustrates a side perspective view of the straddle-type vehicle 100, in accordance with an example of the present subject matter. For the sake of brevity, Figures 1A and 1B have been explained in conjunction with each other.

The straddle-type vehicle 100 hereinafter referred to as "vehicle" may be a two-wheeler that may be a hybrid electric vehicle (HEV), an electric vehicle (EV), Internal Combustion (IC) engine-driven vehicle, or the like. According to an aspect, the vehicle 100 may have a chassis 102 that may be the main support structure of the vehicle 100 and may bear all the stresses of the components assembled in the vehicle 100.

According to an aspect, the vehicle 100 may have three sections, i.e., a front frame structure 104, a floorboard structure 106, and a rear frame structure 108. The chassis 102 of the vehicle 100 may be so designed that the three sections may be manufactured separately and then may be joined together either by way of welding or by connecting provisions. According to an example, the chassis 102 of the vehicle 100 may be manufactured as a whole including the front frame structure 104, the floorboard structure 106, and the rear frame structure 108.

According to an example, the front frame structure 104 may have a handlebar 110, head pipe 111, a front suspension 112, a front wheel 114, and the like. According to another example, the rear frame structure 108 of the chassis 102 of the vehicle 100 may have a first side tube 116, a second side tube 118 parallel to the first side tube 116, a rear frame cross-connector 120 connecting the first side tube 116 to the second side tube 118, a swing arm 122, a rear wheel 124, a motor 126, a rear suspension 128 and the like. The rear frame structure 108 may have a head pipe proximal end (not shown) and a head pipe distal end (not shown), and the rear frame cross-connector 120 may connect the first side tube 116 and the second side tube 118 in the proximity of the head pipe distal end (not shown). According to an example, at least one component 130 of the vehicle 100 may be accommodated between the first side tube 116 and the second side tube 118. In an example, at least one component 130 of the vehicle 100 may be a battery (shown in Fig, 1B as 130).

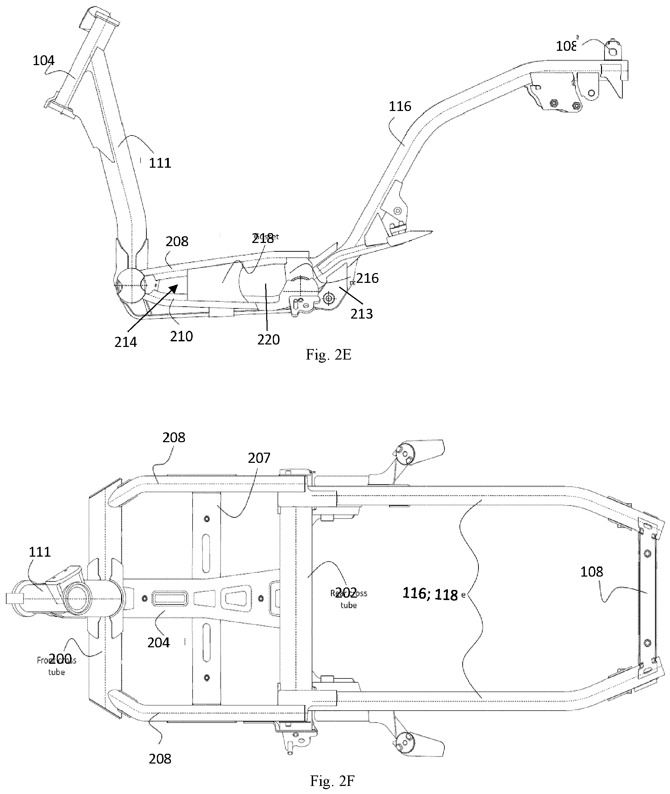

According to an aspect, the floorboard structure 106 may be positioned in between the front frame structure 104 and the rear frame structure 108. The floorboard structure 106 of the present subject matter may be configured to have space (shown in Fig. 2E to accommodate an energy reservoir 132, the configurations of which will be explained later in much detail.

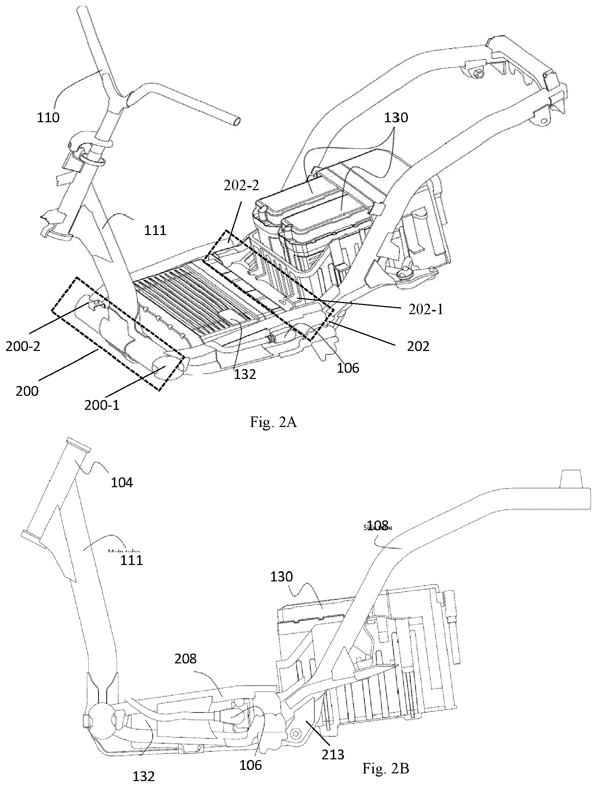

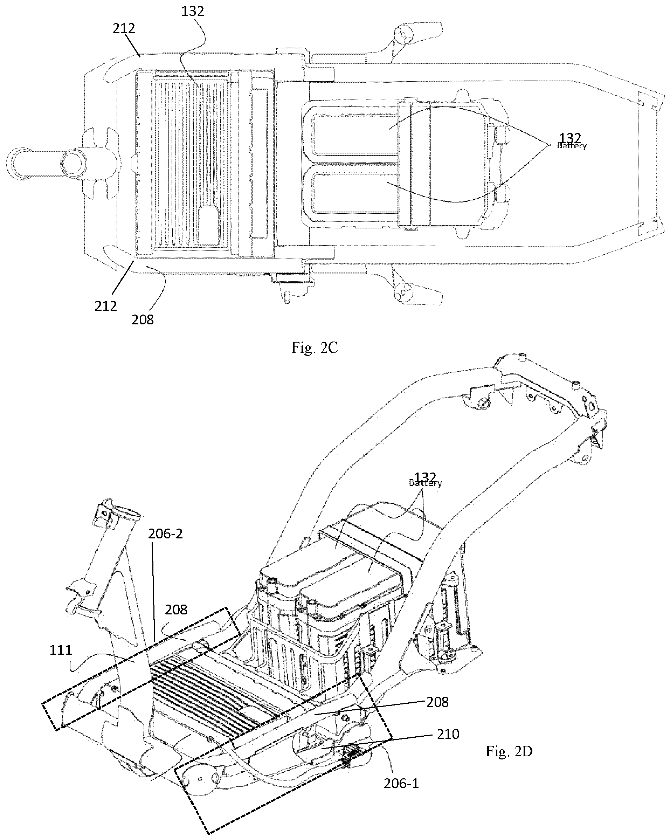

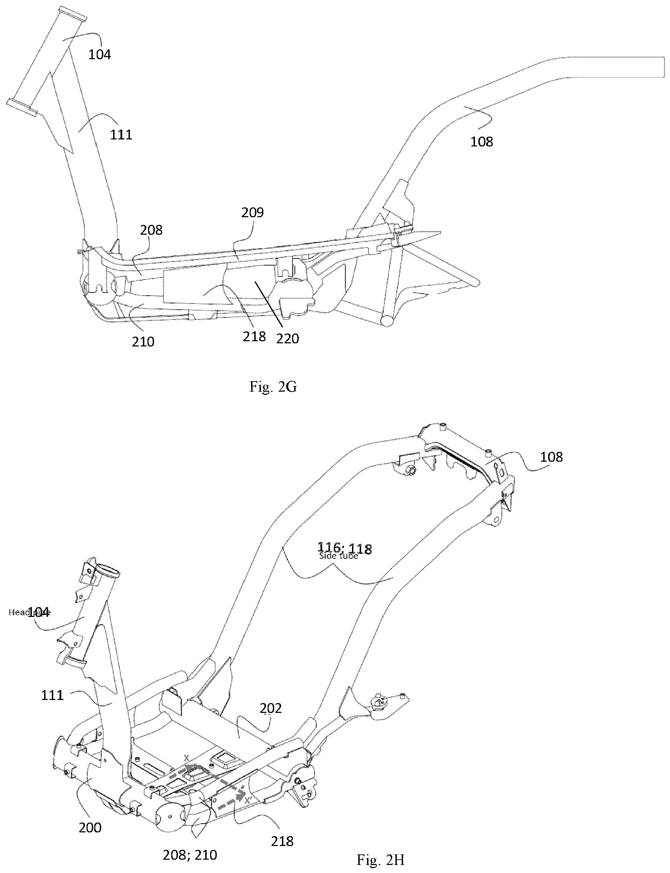

Figure 2A illustrates a perspective view of a chassis 102 of the straddle-type vehicle 100, in accordance with an example of the present subject matter. Figure 2B illustrates a side view of the chassis 102 of the straddle-type vehicle 100, in accordance with an example of the present subject matter. Figure 2C illustrates a top view of the chassis 102 of the straddle-type vehicle 100, in accordance with an example of the present subject matter. Figure 2D illustrates an exploded view of the chassis 102 of the straddle-type vehicle 100, in accordance with an example of the present subject matter. Figure 2E illustrates a side perspective view of the chassis 102 of the straddle-type vehicle 100, in accordance with an example of the present subject matter. Figure 2F illustrates a top perspective view of the chassis 102 of the straddle-type vehicle 100, in accordance with an example of the present subject matter. Figure 2G illustrates a side view of the chassis 102 of the straddle-type vehicle 100, in accordance with an example of the present subject matter. Figure 2H illustrates a side perspective view of a floorboard structure 106 for the chassis 102 of the straddle-type vehicle 100, in accordance with an example of the present subject matter. For the sake of brevity, Figures 2A-2H have been explained in conjunction with each other.

The straddle-type vehicle 100 may have chassis 102 may include the front frame structure 104, the floorboard structure 106, and the rear frame structure 108. According to an example, the floorboard structure 106 may have at least two cross-members 200, 202. One of the cross-members 200, 202 may connect the floorboard structure 106 to the head pipe 111 of the front frame structure 104. One of the cross-members of the floorboard structure 106 may be connected to the rear frame structure 108 through the first side tube 116 and the second side tube 118. According to another example, the floorboard structure 106 of the chassis 102 may have a front cross-member 200 and a rear cross-member 202. In this example, the head pipe 111 connecting to the handlebar 110 of the vehicle 100 may extend downwards and may be connected to the front cross-member 200 that extends in a lateral direction. According to an example, the front cross-member 200 connected to the head pipe 111 may have a first front cross-member end 200-1 and a second front cross-member end 200-2. Similarly, the rear frame structure 108 may also be connected to a rear cross-member 202 that may also extend in the lateral direction. According to an example, the rear cross-member 202 of the floorboard structure 106 may be connected to the rear frame structure 108 of the vehicle 100. According to an example, the rear cross-member 202 connected to the rear frame structure 108 of the vehicle 100 may have a first rear cross-member end 202-1 and a second rear cross-member end 202-2.

According to an example, the floorboard structure 106 may have a longitudinal support bracket 204 across the central vertical plane axis of the chassis 102 to connect the front cross-member 200 and the rear cross-member 202. In other examples, in the floorboard structure 106, the first cross-member 200 and the rear cross-member 202 may be connected through a lateral connector structure 206. According to an example, the lateral connector structure 206 may have a first lateral connector set 206-1 and a second lateral connector set 206-2. The floorboard structure 106 may have a lateral support bracket 207 (shown in Fig. 2F) to connect the first lateral connector set 206-1 and the second lateral connector set 206-2. According to an example, the first lateral connector set 206-1, and the second lateral connector set 206-2 are in the non-parallel configuration with respect to each other. The first lateral connector set 206-1 may connect the first front cross-member end 200-1 of the front cross-member 200 to the first rear cross-member end 202-1 of the rear cross-member 202. The second lateral connector set 206-2 may connect the second front cross-member end 200-2 of the front cross-member 200 to the second rear cross-member end 202-2 of the rear cross-member 202. According to another example, the first lateral connector set 206-1 may have a top lateral connector 208 and a bottom lateral connector 210. According to another example, each of the lateral connector set 206 may have the top lateral connector 208 placed at an angle similar to a floorboard panel 209 angle. Similar to the top lateral connector 208, the bottom lateral connector 210 of each of the lateral connector sets 206 may be placed at an angle similar to a bottom vehicle style panel (not shown).

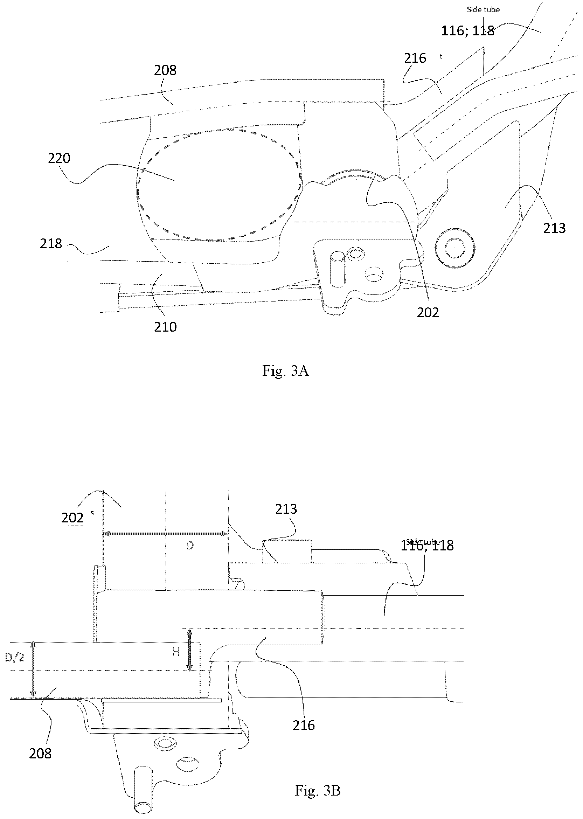

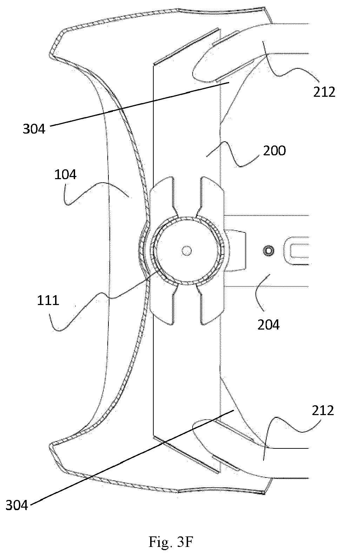

Similarly, the second lateral connector set 206-2 may also have a top lateral connector 208 and a bottom lateral connector 210. In an example, the front end of the top lateral connector 208 and the bottom lateral connector 210 of both the lateral connector sets 206 i.e., the first lateral connector set 206-1, and the second later connector set 206-2, that may be overlapping with the front cross-member 200 may have a slight bend 212 as viewed from a top direction of the vehicle 100. The single bend 212 (also shown in Fig. 3F) in the front end of the top lateral connector 208 and the bottom lateral connector 210 achieves a sleeker design for external style panels and has effective airflow for cooling of the components of the floorboard structure 106 when the vehicle 100 is in motion. In other words, as the vehicle 100 moves, air enters through a plurality of cut-outs (not shown) in the front frame structure 104 of the vehicle 100 which passes through a passage (shown in Fig. 3F as 304) in the front frame structure 104 and the single bend 212 of the top lateral connector 208 and the bottom lateral connector 210 allows air to properly flow towards and through the components of the floorboard structure 106 of the chassis 102. Consequently, an effective airflow for cooling the fuel reservoir 132 and the components of the floorboard structure 106 is achieved. Further, each of the first lateral connector set 206-1 and the second lateral connector set 206-2 may have a bracket 213 (shown in Fig. 3A) mounted on the rear cross-member 202 to connect the bottom lateral connector 210 and the rear cross-member 202. This configuration aids in the bottom lateral connector 210 of the floorboard structure 106 and the rear cross-member 202 to have a stronger connection.

The top lateral connector 208 and the bottom lateral connector 210 may be in a non-parallel configuration with each other. According to an example, a space 214 may be formed between the front cross-member 200, the rear cross-member 202, the first lateral connector set 206-1, and the second lateral connector set 206-2. The entire configuration of the chassis 102 is similar to the conventional chassis however, the only changes that are being made are on the floorboard structure 106. Thus, the packaging assemblies of the components remain the same and no major changes are made to the chassis. According to an aspect, the chassis 102 of the vehicle 100 of the present subject matter may be able to withstand the load of the components of the vehicle 100, the rider, the additional components, or the energy reservoir 132, as a consequence of the mountings of a plurality of reinforcement component 216 and a plurality of reinforcement gussets 218 in the floorboard structure106 for the chassis 102 of the vehicle 100.

According to an example, the plurality of reinforcement components 216 may be positioned between the top lateral connector 208, the rear cross-member 202, and the side tubes 116, 118 of the rear frame structure 108. The plurality of reinforcement components 216 positioned between the floorboard structure 106 and the rear frame structure 108 may connect the top lateral connector 208, rear cross-member 202, and the rear frame structure 108. According to an example, the reinforcement component 216 positioned between the top lateral connector 208, rear cross-member 202, and the rear frame structure 108 increases the strength and stiffness of the chassis 102 to withstand the load.

According to other examples, the plurality of reinforcement gusset 218 may be positioned between the top lateral connector 208 and the bottom lateral connector 210 of each of the lateral connector sets 206-1, 206-2. The reinforcement gussets 218 may be positioned in a perpendicular position between the top lateral connector 208 and the bottom lateral connector 210 that are in a non-parallel configuration. According to an example, the arrangement of the reinforcement gusset 218 is positioned perpendicular to the top lateral connector 208 and the bottom lateral connector 210 forms a vertical 'I' section when viewed from the front direction of the vehicle 100. The arrangement of placement of reinforcement gusset 218 in the floorboard structure 106 provides for both vertical and torsional stiffness of the chassis 102 of the vehicle 100.

Further, the implementations of the lateral support bracket 207 and the longitudinal support bracket 204 in the floorboard structure 106 mentioned above, protect the energy reservoir 132 from bottom impact load while driving the vehicle 100. Therefore, accommodating an energy reservoir 132 in the conventional chassis is made possible without adding any additional cross members or mounting provisions to mount any additional component, that may have affected the packaging assembly of components in the conventional chassis.

As explained earlier, the energy reservoir 132 is accommodated in the space 214 formed between the front cross-member 200, the rear cross-member 202, the first lateral connector set 206-1, and the second lateral connector set 206-2 of the floorboard structure 106 of the chassis 102 for the vehicle 100, and the reinforcement gusset 218 may be positioned on both of the connector set 206 i.e., the first lateral connector set 206-1, and the second lateral connector set 206-2. This configuration results in an accessibility window 220 to be formed between the top lateral connector 208 and the bottom lateral connector 210 in each of the lateral connector sets 206 i.e., the first lateral connector set 206-1, and the second lateral connector set 206-2. This may be explained later in much detail.

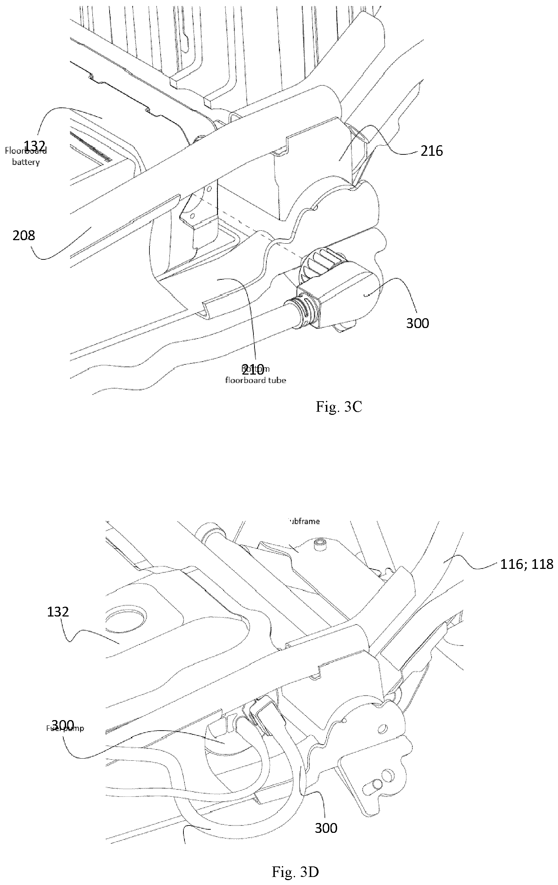

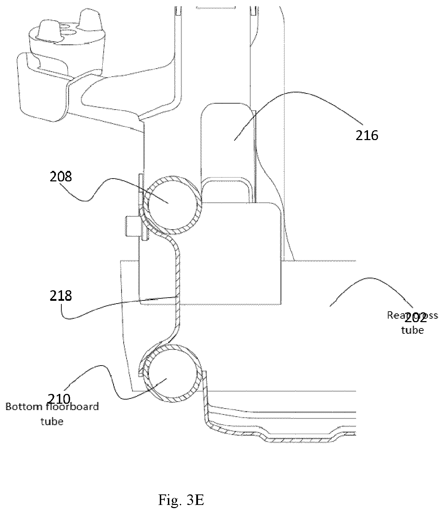

Figure 3A illustrates a perspective view of the floorboard structure 106, in accordance with an example of the present subject matter. Figure 3B illustrates a sectional view of the floorboard structure 106, in accordance with an example of the present subject matter. Figure 3C illustrates a side perspective view of the floorboard structure 106 with an intermediate interface 300, in accordance with an example of the present subject matter. Figure 3D illustrates a side perspective view of the floorboard structure 106 with the intermediate interface 300, in accordance with an example of the present subject matter. Figure 3E illustrates a sectional view of the floorboard structure 106 across a sectional plane X-X shown in Figure 2H, in accordance with an example of the present subject matter. Figure 3F illustrates a top sectional view of the floorboard structure 106, in accordance with an example of the present subject matter. For the sake of brevity, Figures 3A-3F have been explained in conjunction with each other.

According to an example, the space 214 (shown in Fig. 2E) formed between the front cross-member 200, the rear cross-member 202, the first lateral connector set 206-1, and the second lateral connector set 206-2 may be used to package an additional component. For instance, the space 214 may be used for packaging an energy reservoir 132. According to an example, the energy reservoir 132 may be an electrical energy storage device (shown in Fig, 3C as 132) in case the vehicle is EV or HEV. According to another example, the energy reservoir 132 may be a fuel storage tank (shown in Fig. 3D as 132) when the vehicle is the IC engine-driven vehicle or the HEV. Therefore, the same chassis 102 may be used for the vehicle 100 with different drive systems (not shown) with the only change being made on the floorboard structure 106 for the chassis 102 of the vehicle 100. This configuration may enable the floorboard structure 106 to protect and cover the energy reservoir 132 from all 4 directions i.e., vertical, lateral, and longitudinal directions. Additionally, a distance of a central axis of the lateral connector structure 206 from a central vertical plane of the chassis may be greater than a distance of a central axis of one of the first side tube 116 and the second side tube 118 of the rear frame structure 108 from the central vertical plane through the chassis 102 by a distance "H" (as shown in Fig. 3B). According to another example, the distance of a central axis of the lateral connector structure 206 from a central vertical plane cutting through a centre of the floorboard structure 106 is greater than a distance of a central axis of one of the first side tube and the second side tube from the central vertical plane cutting through the centre of the floorboard structure 106 by the distance "H" (as shown in Fig. 3B). This configuration may increase the rigidness of the chassis 102 in a lateral direction and may also provide for effective packaging space for the energy reservoir in the space.

In an implementation as mentioned above, the configuration of the positioning of reinforcement gusset 218 positioned between the top lateral connector 208 and the bottom lateral connector 210 of each of the lateral connector sets 206-1, 206-2 may result in leaving up an accessibility window 220 to be formed between the top lateral connector 208 and the bottom lateral connector 210 in each of the lateral connector sets 206 i.e., the first lateral connector set 206-1, and the second lateral connector set 206-2. In this way, the energy reservoir 132 accommodated in the space 214 may be easily accessed. The accessibility window 220 may be used for providing access to the energy reservoir 132 positioned in the space 214 in the floorboard structure 106 of the chassis 102 of the vehicle 100. For instance, an intermediate interface 300 (shown in Fig. 3C) may be used to connect the energy reservoir 132 with a vehicular component (not shown). In an example, the intermediate interface 300 can be an electrical cable (as shown in Fig. 3C as 300-1) for the electrical energy storage device 132, such as a battery. In another example, the accessibility window 220 may be used for connecting a fuel hose 303 to a fuel tank 132 positioned in the space 214 in the floorboard structure 106, thereby enhancing the serviceability and accessibility of the energy reservoir 132 for the intermediate interfaces 132. According to an example, the vehicular component (not shown) may be a motor, when the vehicle 100 is EV or an HEV (not shown). In this example, the intermediate interface 300 may be a control circuit (shown in Fig. 3C as 300) that may regulate the current supply to the motor (not shown). In other examples, the vehicular component (not shown) may be an IC engine (not shown) in the case of an IC engine-driven vehicle and an HEV (not shown). The intermediate interface 300 in this configuration may be a fuel pump (shown in Fig, 3D as 300).

According to an example, a width of the top lateral connector 208 and the bottom lateral connector 210 may be less than the width of each of the front cross-member 200 and the rear cross-member 202. According to another example, the width of the top lateral connector 208 and the bottom lateral connector 210 may be about half the width of each of the front cross-member 200 and the rear cross-member 202 (as shown in Fig. 3B as "D" and "D/2"). This configuration provides sufficient space for packaging an additional component, without modifying the surrounding interface style parts or the assembling arrangement of the components on the chassis 102 of the vehicle 100.

Although implementations of the straddle-type vehicle 100 are described, it is to be understood that the present subject matter is not necessarily limited to the specific features of the systems or methods or other aspects described herein. Rather, the specific features are disclosed as implementations of the floorboard 106 of the chassis 102 for the straddle-type vehicle 100.

Further aspects of the invention include a chassis for a straddle-type vehicle, a straddle-type vehicle, and a floorboard structure for a chassis of a straddle-type vehicle according to the following clauses 1 to 37:
1. A chassis (102) for a straddle-type vehicle (100), the chassis (102) comprising:
   a head pipe (111);
   a rear frame structure (108);
   a floorboard structure (106) connecting the head pipe (111) and the rear frame structure (108), wherein the floorboard structure (106) comprises,
      a front cross-member (200) connected to the head pipe (111), the front cross-member (200) having a first front cross-member end (200-1) and a second front cross-member end (200-2);
      a rear cross-member (202) connected to the rear frame structure (108), the rear cross-member (202) having a first rear cross-member end (202-1) and a second rear cross-member end (202-2);
   a lateral connector structure (206) connecting the front cross-member (200) and the rear cross-member (202), the lateral connector structure (206) comprising,
      a first lateral connector set (206-1) connecting the first front cross-member end (200-1) of the front cross-member (200) to the first rear cross-member end (202-1) of the rear cross-member (202); and
      a second lateral connector set (206-2) connecting the second front cross-member end (200-2) of the front cross-member (200) to the second rear cross-member end (202-2) of the rear cross-member (202).
2. The chassis (102) according to clause 1, wherein each of the first lateral connector set (206-1) and the second lateral connector set (206-2) comprises a top lateral connector (208) and a bottom lateral connector (210) having an accessibility window (220) formed therebetween, and
   each of the first lateral connector set (206-1) and the second lateral connector set (206-2) comprises a reinforcement gusset (218) to connect the top lateral connector (208) and the bottom lateral connector (210).
3. The chassis (102) according to clause 2, wherein the top lateral connector (208) and the bottom lateral connector (210) are in a non-parallel configuration with respect to each other.
4. The chassis (102) according to clause 1, wherein a length of the front cross-member (200) is less than a length of the rear cross-member (202).
5. The chassis (102) according to clause 1, wherein the rear frame structure (108) comprises:
   a first side tube (116);
   a second side tube (118) substantially parallel to the first side tube (116); and
   a rear frame cross-connector (120) connecting the first side tube (116) to the second side tube,
   wherein the rear frame structure (108) comprises a head pipe proximal end and a head pipe distal end, the rear frame cross-connector (120) connecting the first side tube (116) and the second side tube (118) in proximity of the head pipe distal end.
6. The chassis (102) according to clause 1, wherein the first lateral connector set (206-1) and the second lateral connector set (206-2) are in the non-parallel configuration with respect to each other.
7. The chassis (102) according to clause 1, wherein each of the first lateral connector set (206-1) and the second lateral connector set (206-2) comprises a bracket (213) mounted on the rear cross-member (202) to connect the bottom lateral connector (210) and the rear cross-member (202), and
   each of the first lateral connector set (206-1) and the second lateral connector set (206-2) comprises a reinforcement component (216) to connect the top lateral connector (208), the rear cross-member (202), the rear frame structure (108).
8. The chassis (102) according to clause 1, wherein a distance of a central axis of the lateral connector structure (206) from a central vertical plane of the chassis (102) is greater than a distance of a central axis of one of the first side tube (116) and the second side tube (118) from the central vertical plane of the chassis (102).
9. The chassis (102) according to clause 1, wherein a width of the top lateral connector (208) is less than a width of each of the front cross-member (200) and the rear cross-member (202).
10. The chassis (102) according to clause 9, wherein the width of the top lateral connector (208) is about half the width of each of the front cross-member (200) and the rear cross-member (202).
11. The chassis (102) according to clause 1, wherein the floorboard structure (106) comprises a longitudinal support bracket (204) to connect the front cross-member (200) and the rear cross-member (202), and
   a lateral support bracket (207) to connect the first lateral connector set (206-1) and the second lateral connector set (206-2).
12. A straddle-type vehicle (100) comprising:
   a chassis (102) for the straddle-type vehicle (100), wherein the chassis (102) comprises,
   a head pipe (111);
   a rear frame structure (108);
   a floorboard structure (106) connecting the head pipe (111) and the rear frame structure (108), the floorboard structure (106) comprising,
      a front cross-member (200) connected to the head pipe (111), the front cross-member (200) having a first front cross-member end (200-1) and a second front cross-member end (200-2);
      a rear cross-member (202) connected to the rear frame structure (108), the rear cross-member (202) having a first rear cross-member end (202-1) and a second rear cross-member end (202-2);
      a lateral connector structure (206) connecting the front cross-member (200) and the rear cross-member (202), the lateral connector structure (206) comprising,
         a first lateral connector set (206-1) connecting the first front cross-member end (200-1) of the front cross-member (200) to the first rear cross-member end (202-1) of the rear cross-member (202); and
         a second lateral connector set (206-2) connecting the second front cross-member end (200-2) of the front cross-member (200) to the second rear cross-member end (202-2) of the rear cross-member (202).
13. The straddle-type vehicle (100) according to clause 12, wherein the straddle-type vehicle (100) is one of an electric vehicle (EV), a hybrid electric vehicle (HEV), and an Internal Combustion (IC) engine-driven vehicle.
14. The straddle-type vehicle (100) according to clause 12, wherein the floorboard structure (106) is to accommodate an energy reservoir (132) in a space (214) formed between the front cross-member (200), the rear cross-member (202), the first lateral connector set (206-1), and the second lateral connector set (206-2), and wherein each of the first lateral connector set (206-1) and the second lateral connector set (206-2) comprises a top lateral connector (208) and a bottom lateral connector (210) having an accessibility window (220) formed therebetween.
15. The straddle-type vehicle (100) according to clause 14, wherein the energy reservoir (132) is one of an electrical energy storage device and a fuel storage tank.
16. The straddle-type vehicle (100) according to clause 14, wherein the accessibility window (220) is to access the energy reservoir (132) accommodated in the space (214) to connect the energy reservoir (132) to a vehicular component.
17. The straddle-type vehicle (100) according to clause 14, wherein an intermediate interface connects the energy reservoir (132) to the vehicular component.
18. The straddle-type vehicle (100) according to clause 14, wherein the top lateral connector (208) and the bottom lateral connector (210) of the chassis (102) of the straddle-type vehicle (100) are in a non-parallel configuration with respect to each other, and
   each of the first lateral connector set (206-1) and the second lateral connector set (206-2) comprises a reinforcement gusset (218) to connect the top lateral connector (208) and the bottom lateral connector (210).
19. The straddle-type vehicle (100) according to clause 12, wherein a length of the front cross-member (200) is less than a length of the rear cross-member (202).
20. The straddle-type vehicle (100) according to clause 12, wherein the rear frame structure (108) comprises:
   a first side tube (116);
   a second side tube (118) substantially parallel to the first side tube (116); and
   a rear frame cross-connector (120) connecting the first side tube (116) to the second side tube (118);
   wherein the rear frame structure (108) comprises a head pipe proximal end and a head pipe distal end, the rear frame cross-connector (120) connecting the first side tube (116) and the second side tube (118) in proximity of the head pipe distal end.
21. The straddle-type vehicle (100) according to clause 12, wherein the first lateral connector set (206-1) and the second lateral connector set (206-2) are in the non-parallel configuration with respect to each other.
22. The straddle-type vehicle (100) according to clause 12, wherein each of the first lateral connector set (206-1) and the second lateral connector set (206-2) comprises a bracket (213) mounted on the rear cross-member (202) to connect the bottom lateral connector (210) and the rear cross-member (202), and
   each of the first lateral connector set (206-1) and the second lateral connector set (206-2) comprises a reinforcement component (216) to connect the top lateral connector (208), the rear cross-member (202), the rear frame structure (108).
23. The straddle-type vehicle (100) according to clause 12, wherein a distance of a central axis of the lateral connector structure (206) from a central vertical plane of the chassis (102) of the straddle-type vehicle (100) is greater than a distance of a central axis of one of the first side tube and the second side tube from the central vertical plane of the chassis (102) of the straddle-type vehicle (100).
24. The straddle-type vehicle (100) according to clause 12, wherein a width of the top lateral connector (208) is less than a width of each of the front cross-member (200) and the rear cross-member.
25. The straddle-type vehicle (100) according to clause 24, wherein the width of the top lateral connector (208) is about half the width of each of the front cross-member (200) and the rear cross-member (202).
26. The straddle-type vehicle (100) according to clause 12, wherein the floorboard structure (106) comprises a longitudinal support bracket (204) to connect the front cross-member (200) and the rear cross-member (202), and
   a lateral support bracket (207) to connect the first lateral connector set (206-1) and the second lateral connector set (206-2).
27. The straddle-type vehicle (100) according to clause 12, wherein at least one component of the straddle-type vehicle (100) is accommodated between the first side tube and the second side tube.
28. A floorboard structure (106) for a chassis (102) of a straddle-type vehicle (100), the floorboard structure (106) comprising:
   a front cross-member (200) connectable to a first component of the chassis (102), the front cross-member (200) having a first front cross-member end (200-1) and a second front cross-member end (200-2);
   a rear cross-member (202) connectable to a second component of the chassis (102), the rear cross-member (202) having a first rear cross-member end (202-1) and a second rear cross-member end (202-2);
   a lateral connector structure (206) connecting the front cross-member (200) and the rear cross-member (202), the lateral connector structure (206) comprising,
      a first lateral connector set (206-1) connecting the first front cross-member end (200-1) of the front cross-member (200) to the first rear cross-member end (202-1) of the rear cross-member (202); and
      a second lateral connector set (206-2) connecting the second front cross-member end (200-2) of the front cross-member (200) to the second rear cross-member end (202-2) of the rear cross-member (202).
29. The floorboard structure (106) according to clause 28, wherein each of the first lateral connector set (206-1) and the second lateral connector set (206-2) comprises a top lateral connector (208) and a bottom lateral connector (210) having an accessibility window (220) formed therebetween, and
   each of the first lateral connector set (206-1) and the second lateral connector set (206-2) comprises a reinforcement gusset (218) to connect the top lateral connector (208) and the bottom lateral connector (210).
30. The floorboard structure (106) according to clause 29, wherein the top lateral connector (208) and the bottom lateral connector (210) are in a non-parallel configuration with respect to each other.
31. The floorboard structure (106) according to clause 28, wherein a length of the front cross-member (200) is less than a length of the rear cross-member (202).
32. The floorboard structure (106) according to clause 28, wherein the first lateral connector set (206-1) and the second lateral connector set (206-2) are in the non-parallel configuration with respect to each other.
33. The floorboard structure (106) according to clause 28, wherein each of the first lateral connector set (206-1) and the second lateral connector set (206-2) comprises a bracket (213) mounted on the rear cross-member (202) to connect the bottom lateral connector (210) and the rear cross-member (202), and
   each of the first lateral connector set (206-1) and the second lateral connector set (206-2) comprises a reinforcement component (216) to connect at least the top lateral connector (208) and the rear cross-member (202).
34. The floorboard structure (106) according to clause 28, wherein a distance of a central axis of the lateral connector structure (206) from a central vertical plane cutting through a centre of the floorboard structure (106) is greater than a distance of a central axis of one of the first side tube and the second side tube from the central vertical plane cutting through the centre of the floorboard structure (106).
35. The floorboard structure (106) according to clause 28, wherein a width of the top lateral connector (208) is less than a width of each of the front cross-member (200) and the rear cross-member (202).
36. The floorboard structure (106) according to clause 35, wherein the width of the top lateral connector (208) is about half the width of each of the front cross-member (200) and the rear cross-member (202).
37. The floorboard structure (106) according to clause 28, wherein the floorboard structure (106) comprises a longitudinal support bracket (204) to connect the front cross-member (200) and the rear cross-member (202), and
   the floorboard structure (106) comprising a lateral support bracket (207) to connect the first lateral connector set (206-1) and the second lateral connector set (206-2).

In the above clauses 1 to 37, numbers in parentheses refer to corresponding items in the drawings, but are not to be construed as limiting the scope of the respective clauses.

## Claims

1. A straddle-type vehicle (100) comprising:
a chassis (102) for the straddle-type vehicle (100), wherein the chassis (102) comprises,
a head pipe (111);
a rear frame structure (108);
a floorboard structure (106) connecting the head pipe (111) and the rear frame structure (108), the floorboard structure (106) comprising,
a front cross-member (200) connected to the head pipe (111), the front cross-member (200) having a first front cross-member end (200-1) and a second front cross-member end (200-2);
a rear cross-member (202) connected to the rear frame structure (108), the rear cross-member (202) having a first rear cross-member end (202-1) and a second rear cross-member end (202-2);
a lateral connector structure (206) connecting the front cross-member (200) and the rear cross-member (202), the lateral connector structure (206) comprising,
a first lateral connector set (206-1) connecting the first front cross-member end (200-1) of the front cross-member (200) to the first rear cross-member end (202-1) of the rear cross-member (202); and
a second lateral connector set (206-2) connecting the second front cross-member end (200-2) of the front cross-member (200) to the second rear cross-member end (202-2) of the rear cross-member (202).

2. The straddle-type vehicle (100) as claimed in claim 1, wherein the straddle-type vehicle (100) is one of an electric vehicle (EV), a hybrid electric vehicle (HEV), and an Internal Combustion (IC) engine-driven vehicle.

3. The straddle-type vehicle (100) as claimed in claim 1, wherein the floorboard structure (106) is to accommodate an energy reservoir (132) in a space (214) formed between the front cross-member (200), the rear cross-member (202), the first lateral connector set (206-1), and the second lateral connector set (206-2), and wherein each of the first lateral connector set (206-1) and the second lateral connector set (206-2) comprises a top lateral connector (208) and a bottom lateral connector (210) having an accessibility window (220) formed therebetween.

4. The straddle-type vehicle (100) as claimed in claim 3, wherein the energy reservoir (132) is one of an electrical energy storage device and a fuel storage tank.

5. The straddle-type vehicle (100) as claimed in claim 3, wherein the accessibility window (220) is to access the energy reservoir (132) accommodated in the space (214) to connect the energy reservoir (132) to a vehicular component.

6. The straddle-type vehicle (100) as claimed in claim 3, wherein an intermediate interface connects the energy reservoir (132) to the vehicular component.

7. The straddle-type vehicle (100) as claimed in claim 3, wherein the top lateral connector (208) and the bottom lateral connector (210) of the chassis (102) of the straddle-type vehicle (100) are in a non-parallel configuration with respect to each other, and
each of the first lateral connector set (206-1) and the second lateral connector set (206-2) comprises a reinforcement gusset (218) to connect the top lateral connector (208) and the bottom lateral connector (210).

8. The straddle-type vehicle (100) as claimed in claim 1, wherein a length of the front cross-member (200) is less than a length of the rear cross-member (202) and a width of the top lateral connector (208) is less than a width of each of the front cross-member (200) and the rear cross-member (202).

9. The straddle-type vehicle (100) as claimed in claim 8, wherein the width of the top lateral connector (208) is about half the width of each of the front cross-member (200) and the rear cross-member (202).

10. The straddle-type vehicle (100) as claimed in claim 1, wherein the rear frame structure (108) comprises:
a first side tube (116);
a second side tube (118) substantially parallel to the first side tube (116); and
a rear frame cross-connector (120) connecting the first side tube (116) to the second side tube (118);
wherein the rear frame structure (108) comprises a head pipe proximal end and a head pipe distal end, the rear frame cross-connector (120) connecting the first side tube (116) and the second side tube (118) in proximity of the head pipe distal end.

11. The straddle-type vehicle (100) as claimed in claim 1, wherein the first lateral connector set (206-1) and the second lateral connector set (206-2) are in the non-parallel configuration with respect to each other.

12. The straddle-type vehicle (100) as claimed in claim 1, wherein each of the first lateral connector set (206-1) and the second lateral connector set (206-2) comprises a bracket (213) mounted on the rear cross-member (202) to connect the bottom lateral connector (210) and the rear cross-member (202), and
each of the first lateral connector set (206-1) and the second lateral connector set (206-2) comprises a reinforcement component (216) to connect the top lateral connector (208), the rear cross-member (202), the rear frame structure (108).

13. The straddle-type vehicle (100) as claimed in claim 1, wherein a distance of a central axis of the lateral connector structure (206) from a central vertical plane of the chassis (102) of the straddle-type vehicle (100) is greater than a distance of a central axis of one of the first side tube and the second side tube from the central vertical plane of the chassis (102) of the straddle-type vehicle (100).

14. The straddle-type vehicle (100) as claimed in claim 1, wherein the floorboard structure (106) comprises a longitudinal support bracket (204) to connect the front cross-member (200) and the rear cross-member (202), and
a lateral support bracket (207) to connect the first lateral connector set (206-1) and the second lateral connector set (206-2).

15. The straddle-type vehicle (100) as claimed in claim 1, wherein at least one component of the straddle-type vehicle (100) is accommodated between the first side tube and the second side tube.

16. A floorboard structure (106) for a chassis (102) of a straddle-type vehicle (100), the floorboard structure (106) comprising:
a front cross-member (200) connectable to a first component of the chassis (102), the front cross-member (200) having a first front cross-member end (200-1) and a second front cross-member end (200-2);
a rear cross-member (202) connectable to a second component of the chassis (102), the rear cross-member (202) having a first rear cross-member end (202-1) and a second rear cross-member end (202-2);
a lateral connector structure (206) connecting the front cross-member (200) and the rear cross-member (202), the lateral connector structure (206) comprising,
a first lateral connector set (206-1) connecting the first front cross-member end (200-1) of the front cross-member (200) to the first rear cross-member end (202-1) of the rear cross-member (202); and
a second lateral connector set (206-2) connecting the second front cross-member end (200-2) of the front cross-member (200) to the second rear cross-member end (202-2) of the rear cross-member (202).

17. The floorboard structure (106) as claimed in claim 16, wherein the first lateral connector set (206-1) and the second lateral connector set (206-2) are in the non-parallel configuration with respect to each other; and
wherein each of the first lateral connector set (206-1) and the second lateral connector set (206-2) comprises a top lateral connector (208) and a bottom lateral connector (210) having an accessibility window (220) formed therebetween, and
wherein each of the first lateral connector set (206-1) and the second lateral connector set (206-2) comprises a reinforcement gusset (218) to connect the top lateral connector (208) and the bottom lateral connector (210).

18. The floorboard structure (106) as claimed in claim 17, wherein the top lateral connector (208) and the bottom lateral connector (210) are in a non-parallel configuration with respect to each other.

19. The floorboard structure (106) as claimed in claim 17, wherein a length of the front cross-member (200) is less than a length of the rear cross-member (202) and a width of the top lateral connector (208) is less than a width of each of the front cross-member (200) and the rear cross-member (202).

20. The floorboard structure (106) as claimed in claim 19, wherein the width of the top lateral connector (208) is about half the width of each of the front cross-member (200) and the rear cross-member (202).

21. The floorboard structure (106) as claimed in claim 16, wherein each of the first lateral connector set (206-1) and the second lateral connector set (206-2) comprises a bracket (213) mounted on the rear cross-member (202) to connect the bottom lateral connector (210) and the rear cross-member (202), and
each of the first lateral connector set (206-1) and the second lateral connector set (206-2) comprises a reinforcement component (216) to connect at least the top lateral connector (208) and the rear cross-member (202).

22. The floorboard structure (106) as claimed in claim 16, wherein a distance of a central axis of the lateral connector structure (206) from a central vertical plane cutting through a center of the floorboard structure (106) is greater than a distance of a central axis of one of the first side tube and the second side tube from the central vertical plane cutting through the center of the floorboard structure (106).

23. The floorboard structure (106) as claimed in claim 16, wherein the floorboard structure (106) comprises a longitudinal support bracket (204) to connect the front cross-member (200) and the rear cross-member (202), and
the floorboard structure (106) comprising a lateral support bracket (207) to connect the first lateral connector set (206-1) and the second lateral connector set (206-2).
